# EUROPEAN PATENT APPLICATION

(11) **EP 2 381 658 A1**
(43) Date of publication of application: **26.10.2011**
(21) Application number: 11163450.7
(22) Date of filing: 21.04.2011
(51) Int. Cl.: H04M 1/2755, H04M 1/725

(54) **Bluetooth communication method and system**

(30) Priority: 22.04.2010 KR 20100037401
(71) Applicant: Samsung Electronics Co., Ltd., Gyeonggi-do (KR)
(72) Inventor: Lee, Chang Soo, Suwon-si, Gyeonggi-do (KR); Jeong, Myoung Joon, Suwon-si, Gyeonggi-do (KR); Jeon, Chang Min, Suwon-si, Gyeonggi-do (KR)
(74) Representative: Jenkins, Richard Gavin

(57) **Abstract**

A Bluetooth communication method and system allows a Bluetooth device to rapidly establish a Bluetooth connection. A first Bluetooth device that is in a client mode displays a visual representation of its ID on a display unit. A second Bluetooth device that is in a host mode acquires the displayed visual representation of the ID of the first Bluetooth device via a camera module and extracts the ID of the first Bluetooth device. The second Bluetooth device transmits a Bluetooth communication-connection-request signal to the first Bluetooth device using the extracted ID. The first Bluetooth device transmits a replay signal responding to the Bluetooth communication-connection-request signal to the second Bluetooth device. The second Bluetooth device receives the reply signal and establishes a Bluetooth communication channel with the first Bluetooth device.

## Description

### TECHNICAL FIELD OF THE INVENTION

This invention relates to wireless communication systems and, more particularly, to a Bluetooth communication method and system that can allow a device to rapidly connect to a target Bluetooth device via video information, such that they can perform Bluetooth communication.

### BACKGROUND OF THE INVENTION

Bluetooth is a wireless technology standard that wirelessly connects computers, mobile devices, electric home appliances, and such, located within a relatively short distance of one another and allows them to communicate with each other in real time. Bluetooth allows electric devices to exchange data, such as voice data, and such, in a globally unlicensed Industrial, Scientific, and Medical (ISM) 2.4 GHz short-range radio frequency (RF) band.

For example, a device equipped with a Bluetooth module that can support Bluetooth communication (hereinafter called a Bluetooth device) searches for peripheral Bluetooth devices within its transferable coverage area. The search process includes an inquiry process and a name discovery process.

The inquiry process is performed in such a manner that a Bluetooth device broadcasts an Inquiry Message to peripheral Bluetooth devices, via the Bluetooth antenna according to an Inquiry Command. When peripheral Bluetooth devices receive the Inquiry Message, they broadcast Inquiry Result Messages responding to the Inquiry Message to the Bluetooth device that broadcasted the Inquiry Message, respectively. When the Bluetooth device receives at least one Inquiry Result Message from the peripheral Bluetooth devices, it analyzes the messages and displays the analysis on the display unit.

The name discovery process refers to a process of requesting names of peripheral Bluetooth devices searched via the inquiry process. That is, the name discovery process is conducted as follows. When the Bluetooth device has searched peripheral Bluetooth devices via the inquiry process, it transmits a Name Request Message to them. After that, the Bluetooth device receives replies to the Name Request Message from the peripheral Bluetooth devices, and then displays them on the display unit.

Meanwhile, Bluetooth devices have different names set according to the manufacturers (for example, Anycall, CYON, SKY, Curitel, and such, in the Republic of Korea). This means a number of Bluetooth devices have the same name when a Bluetooth search process is performed. Therefore, conventional Bluetooth devices simultaneously display the names of searched Bluetooth devices and the unique addresses of the Bluetooth devices (e.g., BD_ADDR of a Bluetooth device) acquired via an inquiry process. In that situation, a Bluetooth device user cannot precisely detect a target Bluetooth device to which his/her Bluetooth will be connected via Bluetooth communication, using only a name and a unique address (BD_ADDR) of a Bluetooth device. That is, the conventional Bluetooth communication method and system causes users difficulty in that they must directly check the unique address (BD_ADDR) of a target Bluetooth device. In addition, the conventional Bluetooth communication method and system is also disadvantageous in that it must perform the inquiry process and the discovery process and thus the connection of Bluetooth communication requires a great deal of time.

### SUMMARY OF THE INVENTION

To address the above-discussed deficiencies of the prior art, it is a primary object to provide a Bluetooth communication method and system that can rapidly connect Bluetooth devices to each other via Bluetooth communication.

The present invention further provides a Bluetooth communication method and system that can allow a Bluetooth device to acquire identification information regarding a target Bluetooth device, such as video information, during the connection of Bluetooth communication, such that the Bluetooth device can rapidly connect to the target Bluetooth device via Bluetooth communication.

The present invention further provides a Bluetooth communication method and system that can allow a user to easily and intuitively connect his/her Bluetooth device to a target Bluetooth device.

In accordance with an embodiment of the present invention, a method in a Bluetooth device that supports at least one of a client mode and a host mode for establishing a Bluetooth connection is provided. When in the host mode, the method includes, acquiring an identification (ID) of a client mode Bluetooth device through a camera module. A Bluetooth connection request signal that includes the ID of the client mode Bluetooth device is transmitted to the client mode Bluetooth device. A Bluetooth communication channel is established with the client mode Bluetooth device in response to receiving a reply signal from the client mode Bluetooth device. When in the client mode, a visual representation of an ID of the Bluetooth device is displayed on a display screen. In response to receiving a Bluetooth connection request signal that includes the ID of the Bluetooth device, a reply signal is transmitted to the host mode Bluetooth device.

In accordance with another embodiment of present the invention, an apparatus in a Bluetooth device that supports at least one of a client mode and a host mode for establishing a Bluetooth connection is provided. The apparatus includes a Bluetooth module, a camera module, and a controller. The Bluetooth module supports Bluetooth communication with other Bluetooth devices. The camera module captures images. The controller, when in the host mode, acquires an identification (ID) of a client mode Bluetooth device through the camera module, transmits (through the Bluetooth module) a Bluetooth connection request signal that includes the ID of the client mode Bluetooth device to the client mode Bluetooth device, and establishes a Bluetooth communication channel with the client mode Bluetooth device in response to receiving a reply signal from the client mode Bluetooth device. When the apparatus supports the client mode, the apparatus also includes a display unit that displays at least one of a user interface and an image. When in the client mode, the controller displays a visual representation of an ID of the Bluetooth device on the display unit, and transmits a reply signal to the host mode Bluetooth device through the Bluetooth module in response to receiving a Bluetooth connection request signal that includes the ID of the Bluetooth device.

In accordance with yet another embodiment of present the invention, an apparatus of a Bluetooth device for establishing a Bluetooth connection is provided. The apparatus includes a Bluetooth module and a controller. The Bluetooth module supports Bluetooth communication with other Bluetooth devices. The controller operates in at least one of a host mode and a client mode, and utilizes a visual representation of an identification (ID) for one of the Bluetooth device and another Bluetooth device to establish the Bluetooth connection with the other Bluetooth device.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIGURE 1 illustrates a view of a Bluetooth communication system according to an embodiment of the present invention;

FIGURE 2A illustrates a schematic block diagram of a Bluetooth device according to an embodiment of the present invention;

FIGURES 2B and 2C illustrate examples of ID information transformed into image format, according to an embodiment of the present invention;

FIGURE 3 illustrates a procedure diagram of a Bluetooth communication process performed in a Bluetooth communication system, according to an embodiment of the present invention; and

FIGURES 4A and 4B illustrate a Bluetooth communication process performed in Bluetooth devices, according to an embodiment of the present invention.

### DETAILED DESCRIPTION OF THE INVENTION

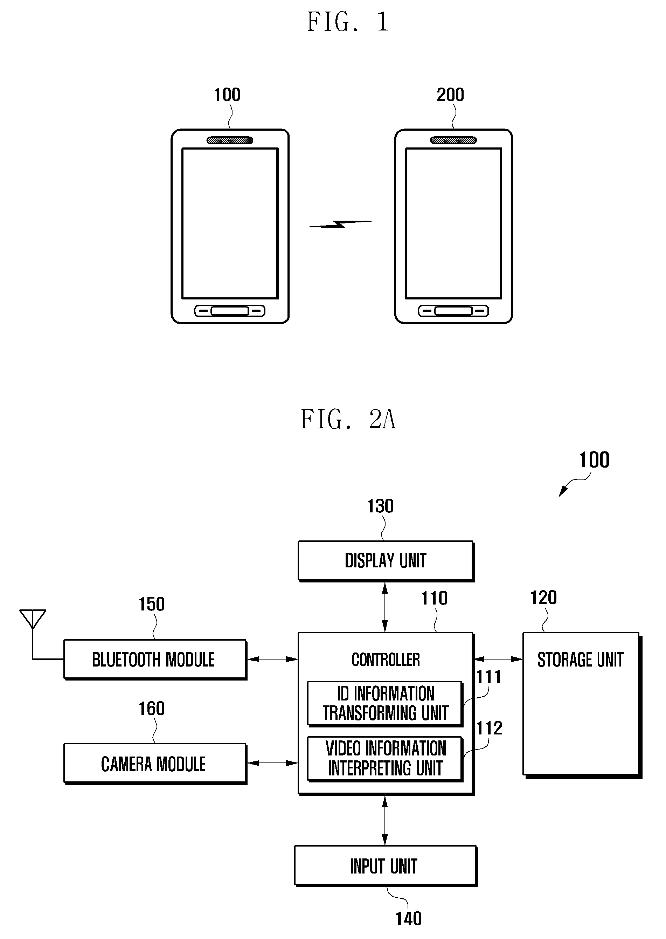

FIGURES 1 through 4B, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged Bluetooth communication device. Detailed descriptions of well-known functions and structures incorporated herein may be omitted to avoid obscuring the subject matter of the present invention.

In the following embodiments of the present invention, Bluetooth devices refer to mobile devices that can support a Bluetooth communication function. It will be appreciated that the present invention can be applied to all information communication devices, multimedia devices, and their applications, such as mobile communication terminals, Personal Digital Assistants (PDAs), smart phones, personal computers, laptop computers, netbook computers, Portable Multimedia Players (PMPs), PlayStation Pockets (PSPs), headsets, navigation systems, televisions, and such.

FIGURE 1 illustrates a view of a Bluetooth communication system according to an embodiment of the present invention. It is assumed that the Bluetooth communication system may be a network system that may be designed based on client-server architecture, and thus may be considered to have a host and at least one client.

Referring to FIGURE 1, the Bluetooth communication system includes a first Bluetooth device 100 and a second Bluetooth device 200.

The first Bluetooth device 100 serves as a client in the Bluetooth communication system. When the first Bluetooth device 100 executes the Bluetooth function, it displays identification information (ID information) on the display unit. The first Bluetooth device 100 can display a visual representation of the ID information on the display unit. For example, the first Bluetooth device 100 can display ID information in a letter format. In addition, the first Bluetooth device 100 can also display ID information in an image format by transforming the ID information into an image. After that, when the first Bluetooth device 100 receives a Bluetooth communication request signal from the second Bluetooth device 200, it transmits a reply signal to the second Bluetooth device 200, thereby performing Bluetooth communication.

The second Bluetooth device 200 serves as a host in the Bluetooth communication system. When the second Bluetooth device 200 executes the Bluetooth function, it operates the camera module to obtain ID information that is displayed, in a letter format or an image format, on the display unit of the first Bluetooth device 100. After that, the second Bluetooth device 200 extracts ID information regarding the first Bluetooth device 100 from the obtained video, and transmits a Bluetooth communication-connection-request signal to the first Bluetooth device 100, using the extracted ID information. When the second Bluetooth device 200 receives a reply signal responding to the Bluetooth communication-connection-request signal from the first Bluetooth device 100, it establishes a Bluetooth communication channel with the first Bluetooth device 100 and performs Bluetooth communication.

As described above, although the embodiment is explained in such a manner that the first Bluetooth device 100 serves as a client and the second Bluetooth device 200 serves as host, it should be understood that the present invention is not limited to the embodiment. For example, the embodiment may also be modified in such a manner that the first Bluetooth device 100 serves as a host and the second Bluetooth device 200 serves as a client. In addition, although FIGURE 1 shows that the second Bluetooth device 200 serving as a host performs Bluetooth communication with the first Bluetooth device 100 serving as a client, it should be understood that the present invention is not limited to the embodiment. For example, the embodiment may be modified in such a manner that the second Bluetooth device 200 may perform Bluetooth communication with a number of Bluetooth devices simultaneously or respectively.

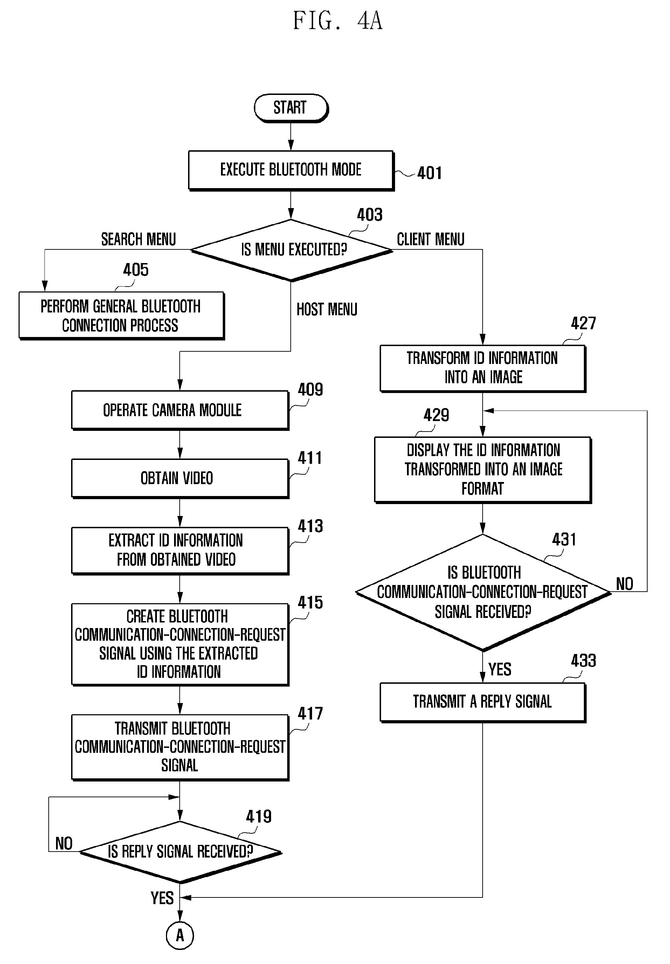

In addition, the first 100 and second 200 Bluetooth devices can be connected to each other via Bluetooth communication by conventional Bluetooth communication methods where an inquiry process and a name discovery process are performed. In that situation, when the first 100 and second 200 Bluetooth devices perform a Bluetooth function, they can provide a menu for choosing a search mode, using a conventional Bluetooth connection method, or a host mode and client mode, according to an embodiment of the present invention. The menu will be described in detail referring to FIGURE 4A.

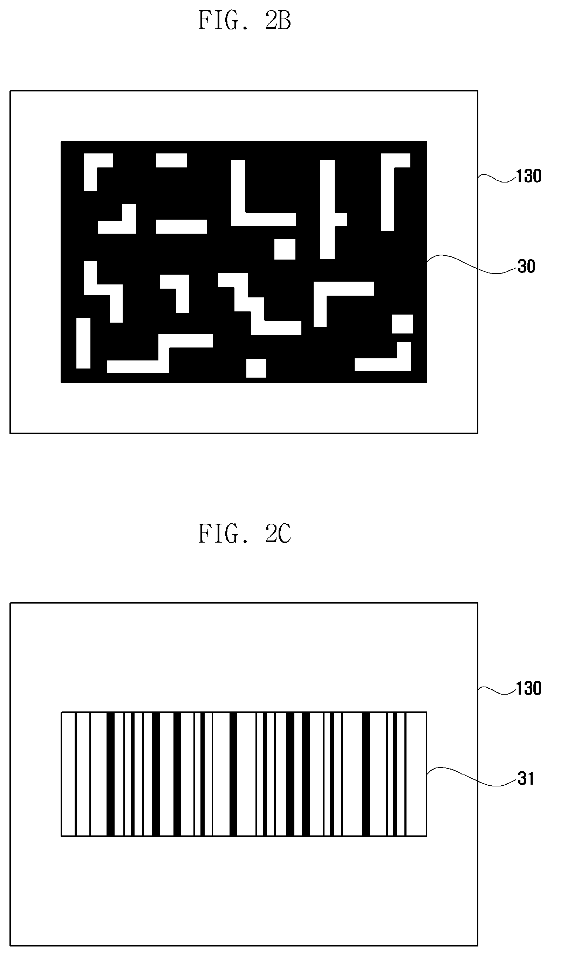

FIGURE 2A illustrates a schematic block diagram of a Bluetooth device according to an embodiment of the present invention. FIGURES 2B and 2C illustrate examples of ID information transformed as an image format, according to an embodiment of the present invention.

As shown in FIGURE 2A, the Bluetooth device 100 includes a controller 110, a storage unit 120, a display unit 130, an input unit 140, a Bluetooth module 150, and a camera module 160. Bluetooth device 100 is substantially similar to Bluetooth device 200.

In the following description, for sake of convenience, the Bluetooth device of the present invention can serve as a host or a client. However, when the Bluetooth device is implemented to serve as only one of a host or a client, it may not utilize one of the components listed above. The Bluetooth device may perform different functions according to whether it is operated in a host mode or a client mode.

The input unit 140 creates signals for inputting numbers and/or letters, for settings functions of the Bluetooth device, and for controlling the functions, and transfers them to the controller 110. The input unit 140 includes a number of keys that a user operates. The input unit 140 also includes function keys set to perform preset functions. The function keys are comprised of direction keys, side keys and shortcut keys. The input unit 140 may be implemented with a touchpad, a touch screen, a keypad with a conventional key layout, and such, or a combination thereof. The keypad with a conventional key layout may be a QWERTY key layout, a 3x4 key layout, a 4x3 key layout, and such. In an embodiment of the present invention, the input unit 140 can create input signals for selecting menus related to Bluetooth communication functions and an input signal for requesting Bluetooth communication connection, and transfers them to the controller 110. The input signals may be created when one of the keys in the input unit 140 is operated or a touch occurs on the touch screen. The input unit 140 may further include a shortcut key for enabling a Bluetooth function, shortcut keys for enabling the Bluetooth device in client and host modes, respectively, and such.

The display unit 130 displays menus of the Bluetooth device and information that is input by the user or provided to the user. The display unit 130 displays a variety of screens for the Bluetooth device, for example, an idle screen, menu screen, a message writing screen, a call screen, and such. In an embodiment of the present invention, the display unit 130 can display a menu screen related to the connection of Bluetooth communication, a screen when Bluetooth communication is performed, and such.

When the Bluetooth device is operated in a client mode, the display unit 130 can display a visual representation of the ID information that is transformed from ID information, for example a unique address (BD_ADDR) of the Bluetooth device, according to a rule preset by Bluetooth device manufacturers. Examples of the transformed visual representation are shown in FIGURES 2B and 2C. FIGURE 2B shows an image 30 in a mosaic format and FIGURE 2C shows an image 31 in a bar code format. Alternatively, the display unit 130 can display the ID information in letter format, without transforming the ID information into an image.

In contrast, when the Bluetooth device is operated in a host mode, the display unit 130 can display a video obtained as the camera module 160 captures the ID information displayed in an image format or a letter format.

The display unit 130 may be implemented with a Liquid Crystal Display (LCD), an Organic Light Emitting Diode (OLED), an Active Matrix OLED (AMOLED), and such. When the display unit 130 is implemented with a touch screen, it may also serve as an input mechanism.

The Bluetooth module 150 supports Bluetooth communication in the Bluetooth devices 100 and 200. The Bluetooth module 150 establishes a Bluetooth communication channel with other Bluetooth devices according to the control of the controller 110, thereby allowing the Bluetooth device 100 or 200 to transmit and receive to and from other Bluetooth devices via the channel. The Bluetooth module 150 of the Bluetooth device 100 or 200 performs Bluetooth communication with other Bluetooth devices, via the Bluetooth antenna, according to Bluetooth protocol. The Bluetooth module 150 can support Hands-Free Profile (HFP) for hands free sets, Headset Profile (HSP) for headsets, File Transfer Profile (FTP) for file transfer, Cordless Telephone Profile (CTP) for cordless telephones, and such.

When the Bluetooth device 100 or 200 is operated in a host mode, the Bluetooth module 150 can transmit a Bluetooth communication-connection-request signal to another Bluetooth device that corresponds to ID information that is extracted from video obtained by the camera module 160, and can then receive a reply signal responding to the request signal from the other Bluetooth device. In contrast, when the Bluetooth 100 or 200 is operated in a client mode, the Bluetooth module 150 receives a Bluetooth communication-connection-request signal from another Bluetooth device, and then transmits a reply signal responding to the request signal to the other Bluetooth device.

Meanwhile, when a search mode using a conventional Bluetooth connection method is executed in the Bluetooth device, the Bluetooth module 150 may transmit an Inquiry Message, a Name Request Message, and such, to another Bluetooth device and may then receive a reply signal responding thereto.

The camera module 160 photographs a subject. In an embodiment of the present invention, when the Bluetooth 100 or 200 is operated in a host mode, the camera module 160 is activated and then captures ID information that is displayed, in an image format or a letter format, on a display unit 130 of another Bluetooth device operated as a client. When the Bluetooth device 100 or 200 is implemented in such a manner that it can be operated only in a client mode, it may not be equipped with the camera module 160. For example, a headset as an example of the Bluetooth device may not include the camera module 160.

The storage unit 120 stores an Operating System (OS) of the Bluetooth device and applications for executing optional functions such as an audio playback function, a photograph or moving image playback function, and such. The storage unit 120 also stores user data, data to be transmitted or received via Bluetooth communication, and such. The storage unit 120 also stores ID information. The ID information may be a unique address (BD_ADDR) of a Bluetooth device. When the Bluetooth device 100 or 200 is implemented to be operated in a client mode, the storage unit 120 allows for the installation of an application program that can transform the ID information into an image format according to a preset rule. Likewise, when the Bluetooth device 100 or 200 is implemented to be operated in a host mode, the storage unit 120 allows for the installation of an application program that can extract ID information from video obtained by the camera module 160. Examples of the application program for extracting ID information are a bar code recognition program, a letter recognition program for recognizing letters such as letters in a vehicle license number plate, among others. The storage unit 120 may include RAM, ROM, or flash memory, or a combination thereof. The storage unit 120 may include one or two integrated memory chips such as a Multi-Chip Package (MCP), among others.

The controller 110 controls the entire operation of the Bluetooth device 100 or 200 and the signal flow between the elements in the Bluetooth device 100 or 200. The controller 110 also processes data in the Bluetooth device 100 or 200. In particular, the controller 110 includes an ID information transforming unit 111 and a video information interpreting unit 112.

The ID information transforming unit 111 transforms ID information regarding the Bluetooth module 150 to an image format when the Bluetooth device 100 or 200 is operated in a client mode. Examples of the transformed image are shown in FIGURES 2B and 2C. FIGURE 2B shows an image 30 in a mosaic format and FIGURE 2C shows an image 31 in a bar code format. The ID information in an image format is displayed on the display unit 130. Meanwhile, when the ID information is displayed in a letter format instead of in an image format on the display unit 130, the controller 110 may be implemented without the ID information transforming unit 111.

The video information interpreting unit 112 can extract ID information regarding the Bluetooth module 150 from a video obtained by the camera module 160 when the Bluetooth device 100 or 200 is operated in a host mode. For example, the video information interpreting unit 112 can extract ID information from an image 31, shown in a barcode format, via a barcode recognition function. Likewise, the video information interpreting unit 112 can also extract ID information from a video obtained as the camera module 160 captures the ID information shown in a letter format. Meanwhile, when the Bluetooth device 100 or 200 is implemented to be operated only in a client mode, the controller 110 may not include the video information interpreting unit 112.

Although not shown in FIGURE 2A, the Bluetooth device 100 or 200 may be configured to selectively further include units that include add-on functions as follows: an RF communication unit; an audio processing unit for reproducing audio signals; a digital broadcast module for receiving and reproducing broadcasts; an audio source reproducing module, such as an MP3 player module; and an Internet communication module for performing communication via the Internet. With the spread of digital convergence, although Bluetooth devices vary too greatly to list their modifications in this description, it will be easily appreciated to those skilled in the art that the other units equivalent to the above-listed units may be further included in the Bluetooth device of the present invention.

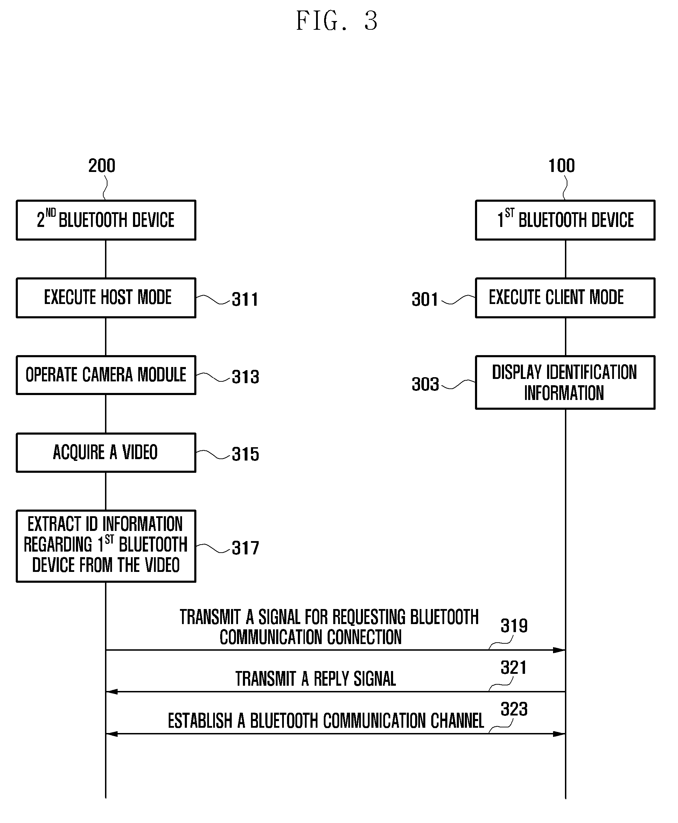

FIGURE 3 illustrates a procedure diagram of a Bluetooth communication process performed in a Bluetooth communication system, according to an embodiment of the present invention.

Referring to FIGURE 3, the first Bluetooth device 100 starts to operate in a client mode according to an input signal or a touch signal on the touch screen (block 301). In the client mode, the first Bluetooth device 100 displays ID information, stored in the storage unit 120, on the display unit 130 (block 303). For example, the first Bluetooth device 100 displays the ID information in an image format or a letter format. In order to display the ID information in an image format, the first Bluetooth device 100 may further perform a process of transforming ID information into an image format. An example of the ID information is a unique address (BD_ADD) of the first Bluetooth device 100.

Meanwhile, the second Bluetooth device 200 starts to operate in a host mode according to an input signal or a touch signal on the touch screen (block 311). In the host mode, the second Bluetooth device 200 operates its camera module 160 (block 313). In block 315, the second Bluetooth device 200 controls its camera module 160 to capture the ID information that is displayed, in an image format or a letter format, on the display unit 130 of the first Bluetooth device 100. In block 317, the second Bluetooth device 200 extracts the ID information regarding the first Bluetooth device 100 from the video obtained by the camera module 130. For example, when the video is obtained, as a barcode image format of ID information regarding the first Bluetooth device 100, the second Bluetooth device 200 can extract the ID information via the barcode recognition function. In addition, when the video is obtained as a mosaic format image of ID information regarding the first Bluetooth device 100, the second Bluetooth device 200 can extract the ID information by performing the inverse transformation, i.e., the inverse process of the transformation for transforming ID information into a mosaic image format. In contrast, when the video is obtained as a letter format (e.g., English letters, numbers, and such) of ID information regarding the first Bluetooth device 100, the second Bluetooth device 200 can extract the ID information via the letter recognition function.

After extracting the ID information regarding the first Bluetooth device 100 at block 317, the second Bluetooth device 200 controls the Bluetooth module 150 to transmit a Bluetooth communication-connection-request signal to the first Bluetooth device 100, using the extracted ID information (step 319). The first Bluetooth device 100 receives the Bluetooth communication-connection-request signal and then transmits a reply signal to the second Bluetooth device 200 (step 321). When the second Bluetooth device 200 receives the reply signal, it establishes a Bluetooth communication channel with the first Bluetooth device 100 and then performs Bluetooth communication, transmitting data, such as audio data, photograph data, phone book data, and such, via the channel (step 323).

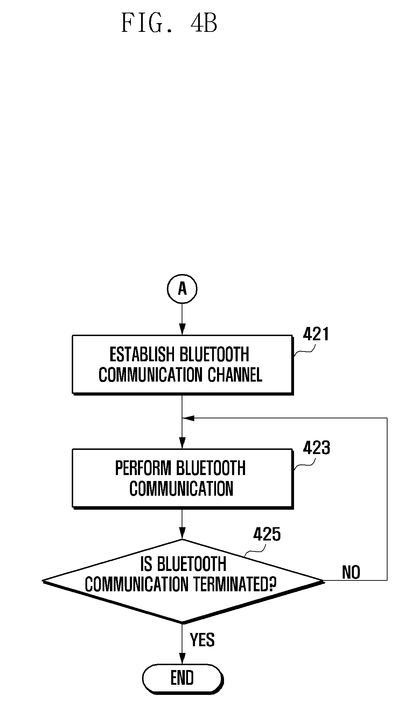

FIGURES 4A and 4B illustrate a Bluetooth communication process performed in Bluetooth devices, according to an embodiment of the present invention. In the following description, the method is described based on a Bluetooth device such as a mobile device, and such, that can be operated in a client mode and a host mode.

Referring to FIGURES 4A and 4B, the controller executes a Bluetooth mode according to an input signal or a touch signal of a touch screen (block 401). When the Bluetooth device is operated in the Bluetooth mode, the display unit 130 displays a menu screen according to the execution of the Bluetooth mode. The menu screen includes a host menu for collecting ID information via the camera module, a client menu for displaying ID information in an image format or a letter format on the display unit, menus for setting other optional functions such as a function for performing Bluetooth communication, and so forth. The menu screen also includes a search menu for performing a conventional Bluetooth communication connection method.

In block 403, the controller 110 determines whether a menu is executed. When the controller 110 ascertains that a search menu is executed at block 403, it performs an inquiry process and a name discovery process, and thus conducts Bluetooth communication connection that corresponds to a conventional Bluetooth communication connection procedure (block 405).

When the controller 110 ascertains that a client menu is executed at block 403, it transforms the ID information of the Bluetooth device into an image format (block 427). To this end, the controller may include an ID information transforming unit. The ID information may be a unique address (BD_ADDR) of the Bluetooth device. The ID information may be transformed into a preset image format a barcode image format, or some other format that identifies the Bluetooth device.

When transforming the ID information into an image format at block 427, the controller 110 displays the ID information in an image format on the display unit (block 429).

In another embodiment, the method may be modified in such way that ID information is displayed in a letter format (e.g., English letters, numbers, and such) without transformation into video. In that situation, the modification does not need to perform block 427 and, instead, displays the ID information at block 429.

While displaying the ID information in an image format on the display unit at block 429, the controller determines whether a Bluetooth communication-connection-request signal (block 431) has been received. When the controller does not receive a Bluetooth communication-connection-request signal at block 431, it returns to and proceeds with block 429. In contrast, when the controller receives a Bluetooth communication-connection-request signal at block 431, it transmits a reply signal responding to the Bluetooth communication-connection-request signal to another Bluetooth device that transmitted from the Bluetooth communication-connection-request signal (block 433) and proceeds with block 421 to establish a Bluetooth communication, and perform subsequent operations will be described later.

In contrast, when the controller ascertains that a host menu is executed at block 403, the controller operates the camera module (block 409). The camera module captures the video (i.e., ID information in an image format or a letter format) displayed on the display unit of a target Bluetooth device to be connected in Bluetooth communication (i.e., the first Bluetooth device 100 shown in FIGURE 1 and FIGURE 3) (block 411). After obtaining the video at block 411, the controller extracts ID information from the obtained video (block 413). To this end, the controller may include a video information interpreting unit. The video information interpreting unit extracts ID information from the video obtained by the camera module, via a letter recognition function or a barcode recognition function.

After extracting the ID information at block 413, the controller creates a Bluetooth communication-connection-request signal using the extracted ID information (block 415), and transmits the created request signal to the target Bluetooth device (block 417) .

In block 419, the controller detects whether a reply signal responding to the Bluetooth communication-connection-request signal has been received from the target Bluetooth device. When the controller does not receive a reply signal in a preset period of time (e.g., 15 seconds) at block 419, it may display a pop-up message stating that no reply signal has been received on the display unit and may stop transmitting the Bluetooth communication-connection-request signal to the target Bluetooth device. In contrast, when the controller receives a reply signal at block 419, it establishes a Bluetooth communication channel with the target Bluetooth device (block 421). After the Bluetooth communication channel has been established at block 421, the controller allows the Bluetooth device to perform Bluetooth communication with the target Bluetooth device through the Bluetooth communication channel that was established between the two Bluetooth devices (block 423).

In block 425, the controller determines whether a signal for terminating Bluetooth communication has been received. When the controller does not receive a signal for termination Bluetooth communication at block 425, it allows for Bluetooth communication to continue between the Bluetooth device and the target Bluetooth device. In contrast, when the controller receives a signal for termination Bluetooth communication at block 425, it terminates Bluetooth communication by disconnecting the Bluetooth communication channel. When the controller terminates Bluetooth communication, it may enter an idle mode or return to block 403 and display a menu screen.

In the foregoing description, an embodiment was described with a Bluetooth device that can be operated both in a client mode and a host mode. However, when the embodiment is applied to a Bluetooth device that can be operated only in a client mode or a host mode, it may be modified in such a manner that the operations of the blocks 409 to 433 that correspond to the missing mode do not need to be performed. For example, in a Bluetooth device that can be operated only in a client mode, the Bluetooth communication method does not need to perform blocks 409 to 419 of the process of FIGURE 4A. Likewise, in a Bluetooth device that can be operated only in a host mode, the Bluetooth communication method does not need to perform blocks 427 to 433 of the process of FIGURE 4A.

As described above, although the embodiment was described in such a manner that a selection is made via a menu screen to execute a host or client mode, it should be understood that the present invention is not limited to the embodiment. For example, the embodiment may be implemented in such a manner to directly execute a host or a client mode by a shortcut key.

As described above, the Bluetooth communication method and system according to the present invention may be implemented with program commands that can be conducted via various types of computers and recorded in computer-readable recording media. The computer-readable recording media contain program commands, data files, data structures, and such, or a combination thereof. The program commands recorded in the recording media may be designed or configured to comply with the present invention or may be software well-known to the ordinary person skilled in the art.

The computer-readable recoding media includes hardware systems for storing and conducting program commands. Examples of the hardware systems are magnetic media such as a hard disk, floppy disk, a magnetic tape, optical media such as CD-ROM and DVD, Magneto-Optical Media such as floptical disk, ROM, RAM, flash memory, and so forth. The program commands include assembly language or machine code complied by a complier and a higher level language interpreted by an interpreter. The hardware systems may be implemented with at least one software module to comply with the present invention.

As described above, the Bluetooth communication method and system according to the present invention can allow a Bluetooth device to acquire identification information regarding a target Bluetooth device, in video information, thereby rapidly and correctly connecting the Bluetooth device and the target Bluetooth device via Bluetooth communication. In addition, the Bluetooth communication method and system can easily and rapidly connect Bluetooth devices to each other via Bluetooth communication, without performing a process of searching a number of Bluetooth devices and selecting one of them, thereby providing user convenience.

Although the present disclosure has been described with an exemplary embodiment, various changes and modifications may be suggested to one skilled in the art. It is intended that the present disclosure encompass such changes and modifications as fall within the scope of the appended claims.

## Claims

1. A Bluetooth communication method comprising:
displaying (303; 429), by a first Bluetooth device, identification-information (ID information) on the display unit;
acquiring (315; 411), by a second Bluetooth device, a video by capturing the displayed ID information regarding the first Bluetooth device via the camera module;
extracting (317; 413), by the second Bluetooth device, the ID information regarding the first Bluetooth device from the acquired video;
transmitting (319; 417), by the second Bluetooth device, a Bluetooth communication-connection-request signal to the first Bluetooth device using the extracted ID information;
transmitting (321; 433), by the first Bluetooth device, a replay signal responding to the Bluetooth communication-connection-request signal to the second Bluetooth device;
establishing (323; 421), when the second Bluetooth device receives the reply signal, a Bluetooth communication channel with the first Bluetooth device; and
performing (423) Bluetooth communication between the first and second Bluetooth devices via the Bluetooth communication channel.

2. The Bluetooth communication method of claim 1, wherein the ID information is a unique address of a Bluetooth device.

3. The Bluetooth communication method of claim 1, wherein the display (303; 429) of ID information on the display unit of the first Bluetooth device comprises at least one of the following:
transforming (427) the ID information of the first Bluetooth device into a visual representation; and
displaying **the transformed** visual representation of the ID information.

4. The Bluetooth communication method of claim 3, wherein the transformation (427) of the ID information into a visual representation comprises:
transforming the ID information into at least one of a mosaic image, a barcode image, and a text.

5. The method of claim 1, further comprising disconnecting the Bluetooth communication channel in response to receiving a signal for terminating the Bluetooth connection.

6. A Bluetooth communication system comprising:
a first Bluetooth device (100) for displaying the ID information in an image format or a letter format; and
a second Bluetooth device (200) for acquiring a video by capturing the displayed ID information regarding the first Bluetooth device (100) via the camera module (160), for extracting the ID information regarding the first Bluetooth device (100) from the acquired video, for establishing a Bluetooth communication channel with the first Bluetooth device (100) using the extracted ID information, and for performing Bluetooth communication via the Bluetooth communication channel.

7. The Bluetooth communication system of claim 6, wherein the ID information is a unique address of a Bluetooth device.

8. The Bluetooth communication system of claim 6, wherein the first Bluetooth device (100) comprises:
a display unit (130) for displaying the ID information of the first Bluetooth device (100);
a Bluetooth module (150) for receiving a Bluetooth communication-connection-request signal from the second Bluetooth device (200) and transmitting a reply signal responding to the request signal to the second Bluetooth device (200); and
a controller (110) for controlling Bluetooth communication connection with the second Bluetooth device (200).

9. The Bluetooth communication system of claim 8, wherein the controller (110) comprises:
an ID information transforming unit (111) for transforming the ID information into a visual representation.

10. The Bluetooth communication system of claim 9, wherein the ID information transforming unit (111) transforms the ID information into at least one of a mosaic image format (30), a barcode image format (31), and a text.

11. The Bluetooth communication system of claim 6, wherein the second Bluetooth device (200) comprises:
a camera module (160) for acquiring a video of the ID information displayed on a display unit (130) of the first Bluetooth device (100);
a controller (110) for extracting the ID information regarding the first Bluetooth device (100) from the acquired video; and
a Bluetooth module (150) for transmitting a Bluetooth communication-connection-request signal to the first Bluetooth device (100) using the ID information regarding the first Bluetooth device (100), for receiving a reply signal responding to the request signal from the first Bluetooth device (100), and for performing Bluetooth communication, under the control of the controller (110).

12. The Bluetooth communication system of claim 11, wherein the controller (110) comprises:
an **video** information interpreting unit (112) for extracting the ID information regarding the first Bluetooth device (100) from the acquired video, via at least one of a barcode recognition function and a letter recognition function.

13. The Bluetooth communication system of claim 6, wherein one of the first Bluetooth device (100) and the second Bluetooth device (200) is further configured to disconnect the Bluetooth communication channel in response to receiving a signal for terminating the Bluetooth connection.
